Europäisches Patentamt

European Patent Office

Office européen des brevets

(19)

(11) Veröffentlichungsnummer **0 019 280**
**B1**

(12) # EUROPÄISCHE PATENTSCHRIFT

(45) Veröffentlichungstag der Patentschrift:
19.09.84

(51) Int. Cl.³ **G 06 K 19/06,** B 42 D 15/02

(21) Anmeldenummer: 80102694.9

(22) Anmeldetag: 14.05.80

(54) **Ausweiskarte mit IC-Baustein.**

(30) Priorität: 17.05.79 DE 2920012

(43) Veröffentlichungstag der Anmeldung:
26.11.80 Patentblatt 80/24

(45) Bekanntmachung des Hinweises auf die Patenterteilung.
19.09.84 Patentblatt 84/38

(84) Benannte Vertragsstaaten.
AT BE CH FR GB IT LI LU NL SE

(56) Entgegenhaltungen:
DE - A - 2 659 573
US - A - 2 637 994
US - A - 3 702 464

(73) Patentinhaber: GAO Gesellschaft für Automation und
Organisation mbH, Euckenstrasse 12,
D-8000 München 70 (DE)

(72) Erfinder: Haghiri-Tehrani, Yahya, Zieblandstrasse 25,
8000 München 40 (DE)
Erfinder Hoppe, Joachim, Breisacherstrasse 1,
D-8000 München 80 (DE)

(74) Vertreter Kador . Klunker . Schmitt-Nilson . Hirsch,
Corneliusstrasse 15, D-8000 München 5 (DE)

**Beschreibung**

Die Erfindung betrifft eine Ausweiskarte mit IC-Baustein zur Verarbeitung elektrischer Signale, der mit einem separaten Trägerelement verbunden ist, das in ein Fenster des Kartenkörpers eingesetzt ist, wobei die Kontaktflächen und die mit ihnen verbundenen Leiterbahnen zum Betrieb des Bausteins auf dem Trägerelement angeordnet sind.

Aus der DE-A 2 659 573 ist bereits eine derartige Ausweiskarte bekannt. Der Baustein ist mit allen Zuleitungen und Kontakten auf einer Trägerplatte befestigt, die wiederum in eine Aussparung oder ein Fenster der Ausweiskarte eingesetzt ist. Die Trägerplatte ist mit der Ausweiskarte durch Verkleben bzw. Verschweißen starr verbunden. Die Kontaktflächen befinden sich auf der gleichen Seite der Trägerplatte wie der aufgeklebte IC-Baustein. Der Zugang zu den Kontakten ist daher nur über entsprechende Löcher in der Ausweiskarte möglich.

Die bekannte Karte zeigt erstmals einen Weg auf, wie die diffizilen IC-Bausteine in Ausweiskarten eingebettet werden können. Der bekannte Kartenaufbau weist jedoch noch so viele Nachteile auf, daß an eine praktische Verwendung dieser mit IC-Bausteinen ausgerüsteten Ausweiskarten voerst nicht zu denken ist. Eine besondere Schwierigkeit ist die Verbindung des IC-Bauteils bzw. der Trägerplatte, auf der der IC-Bauteil aufgeklebt ist mit dem Kartenmaterial. Derartige Ausweiskarten werden bekanntlich durch den täglichen Gebrauch starken Biegebelastungen ausgesetzt, die sich bei dem bekannten Aufbau direkt auf die Zuleitungen des IC-Bausteins übertragen. Durch diese Wechselbeanspruchung kann es zu Zuleitungsunterbrechungen und Defekten des IC-Bausteins kommen.

Infolge der unterschiedlichen Biegesteifigkeit der Trägerplatte einerseits und der Ausweiskarte andererseits kommt es an den Verbindungsnähten zu hohen Spannungskonzentrationen, die leicht zu einem Aufreißen und damit Lösen der Trägerplatte von der Ausweiskarte führen.

Abgesehen von diesen grundsätzlichen Schwierigkeiten weist der bekannte Kartenaufbau noch weitere, durch seine spezifische Bauart bedingte Nachteile auf. Da die Kontaktflächen nur durch Löcher in der Ausweiskarte selbst zugänglich sind, besteht die Notwendigkeit, die Löcher mit leitendem Material zu füllen, um eine Verschmutzung der Kontakte zu verhindern. Dies erfordert einen zusätzlichen Arbeitsgang. Die Trägerplatte mit dem IC-Baustein hat eine solche Höhe, jedenfalls im eingebauten Zustand, daß sie nur in dem Bereich einer genormten Karte angeordnet werden kann, in dem Prägeausbuchtungen erlaubt sind. Diese Prägebereiche sind nach geltender Norm nur auf eine Zeilenbreite beschränkt, der IC-Baustein benötigt aber eine Ausbuchtung, die sich über mehrere Zeilen erstreckt. Es ist daher nicht möglich, die bekannten Karten so auszubilden, daß sie der geltenden Norm entsprechen.

Die für die Einlagerung der Trägerplatten erforderlichen mehrstufigen Ausbuchtungen mit unterschiedlichen Materialstärken sind bezüglich ihrer Herstellung relativ aufwendig, sie lassen sich darüber hinaus nur bei Vollplastik-Ausweiskarten anbringen.

Aus der US-A-3 702 464 ist eine Ausweiskarte mit einem eingebetteten IC-Baustein bekannt, wobei der IC zum Teil mit einem elastischen Material umgeben ist. An der Unterseite des IC's erfolgt die Kontaktierung mit den Leiterbahnen, die im Kartenmaterial fest verankert, zu einer Stirnseite der Ausweiskarte geführt werden. Diese Anordnung hat eine Reihe von Nachteilen, die sich insbesondere beim täglichen Gebrauch negativ auswirken. Insbesondere wird hier lediglich der IC-Baustein in gewisser Weise durch das ihn umgebende elastische Material geschützt. Bei Verbiegungen konzentrieren sich jedoch die gesamten Kräfte auf die Kontaktstellen, da der Schaltkreis nicht vollständig mit elastischem Material umgeben ist. Ausweichbewegungen desselben sind nur möglich, soweit dies die Kontaktstellen erlauben, die jedoch üblicherweise als starre Verbindungen ausgeführt sind. Eine weitere Schwachstelle der bekannten Ausweiskarte sind die Leiterbahnen. Da diese fest verankert im Kartenmaterial große Flächen überstreichen, ist ein Bruch dieser Bahnen bei starken Druckbelastungen, denen die Karte im täglichen Gebrauch ausgesetzt ist, nahezu unvermeidbar.

Der Erfindung liegt die Aufgabe zugrunde, eine Ausweiskarte der eingangs bezeichneten Art zu schaffen, bei der die Verbindung zwischen dem Trägerelement mit dem IC-Baustein und dem Kartenkörper so gestaltet ist, daß sie auch sehr starken Biegewechselbelastungen standhält.

Erfindungsgemäß wird die Aufgabe durch die im Kennzeichen des Hauptanspruchs angegebenen Merkmale gelöst.

Bei der Erfindung wird von der Erkenntnis Gebrauch gemacht, daß nicht der IC-Baustein selbst, sondern bereits ein Zwischenerzeugnis in der Karte eingelagert werden muß, das den IC-Baustein und sämtliche zugehörigen Kontaktelemente aufweist. Die Fertigung dieses Trägerelements kann bei der dafür spezialisierten Elektronikfirma unter Verwendung hochwertiger Materialien und entsprechender Ansprüche an die Fertigung erfolgen. Das Einbringen der Trägerelemente in die Ausweiskarten dagegen kann unter Verwendung des üblichen Know-hows bei dem auf Ausweiskartenherstellung spezialisierten Erzeuger erfolgen. Voraussetzung für den Erfolg der Erfindung ist die Ausgestaltung des Trägerelements als geschlossene Einheit, in dessen Innerem der IC-Baustein gelagert ist auf dessen einer Seite sich die Kontaktflächen befinden. Beim Einsetzen des Trägerelements in ein entsprechend geformtes Fenster des Kartenkörpers bleibt rings um das Trägerelement ein Zwischenraum, so daß auch bei extremer Biegung der Ausweiskarte kein direkter körperlicher Kontakt zwischen den Innenwänden des Fensters und Trägerelement, etwa durch ein Verkeilen, erfolgen kann. Das Trägerelement wird in seiner Lage durch elastische Verbindungselemente, die den Spalt zwischen Trägerelement und Kartenkörper überbrücken, festgehalten. Die Überbrückung des Spaltes kann dabei durch Ausfüllen des Spaltes mit elastischem Material vorgenommen werden.

Gemäß einer vorteilhaften Weiterbildung der Erfindung werden die elastischen Verbindungselemente durch auf Ober- und/oder Unterseite des Kartenkörpers aufkaschierte Deckfolien gebildet. Das Trägerelement wird dabei lediglich von den Deckfolien, die beispielsweise selbstklebend sein können, im Fenster gehalten. Eine der Deckfolien muß selbstverständlich im Bereich der Kontaktflächen des Trägerelements eine entsprechende Aussparung aufweisen. Die Kontakte sind also, ohne einen zusätzlichen Arbeitsgang vorsehen zu müssen, frei zugänglich und somit selbstreinigend. Da die Deckfolien im sogenannten Kaltkaschierverfahren aufgebracht werden, wird der IC-Baustein auch thermisch nicht belastet.

Weitere vorteilhafte Ausgestaltungen der Erfindung sind Gegenstand von Unteransprüchen.

Durch die schwimmende Lagerung des als geschlossene Einheit ausgebildeten Trägerelements in einem Fenster des Kartenkörpers erhält die Karte auch unter extremen Wechselbelastungen eine solche Haltbarkeit, daß damit erstmals ihr praktischer Einsatz ermöglicht wird.

Nachfolgend ist eine Ausführungsform der Erfindung anhand der Zeichnung beispielsweise beschrieben. Darin zeigt

Fig. 1 eine Draufsicht auf eine Ausweiskarte mit eingesetztem Trägerelement,

Fig. 2 einen Querschnitt durch die Ausweiskarte und das Trägerelement und

Fig. 3 einen Querschnitt durch das Trägerelement allein.

Bei dem gezeigten Ausführungsbeispiel ist das Fenster, in das das Trägerelement einsetzt ist, in einer Ecke der Ausweiskarte außerhalb der Hauptspannungsachsen angeordnet. Eine solche Anordnung hat sich als vorteilhaft erwiesen, weil sich die Karte in diesem Bereich nicht so stark verformt. Die Ausweiskarte 10 besteht wie üblich aus einem Kartenkörper 12, der auf Ober- und Unterseite mit je einer Deckfolie 14, 16 kaschiert ist. Das Aufbringen der Folie kann im sogenannten Kaltkaschierverfahren erfolgen, d. h. ohne Anwendung von Wärme. Der Kartenkörper 12 kann Vollplastik sein, möglich ist jedoch auch ein Mehrschichtenkörper aus Papier, der sämtliche, bei Ausweiskarten übliche Echtheitsmerkmale zusätzlich aufweisen kann.

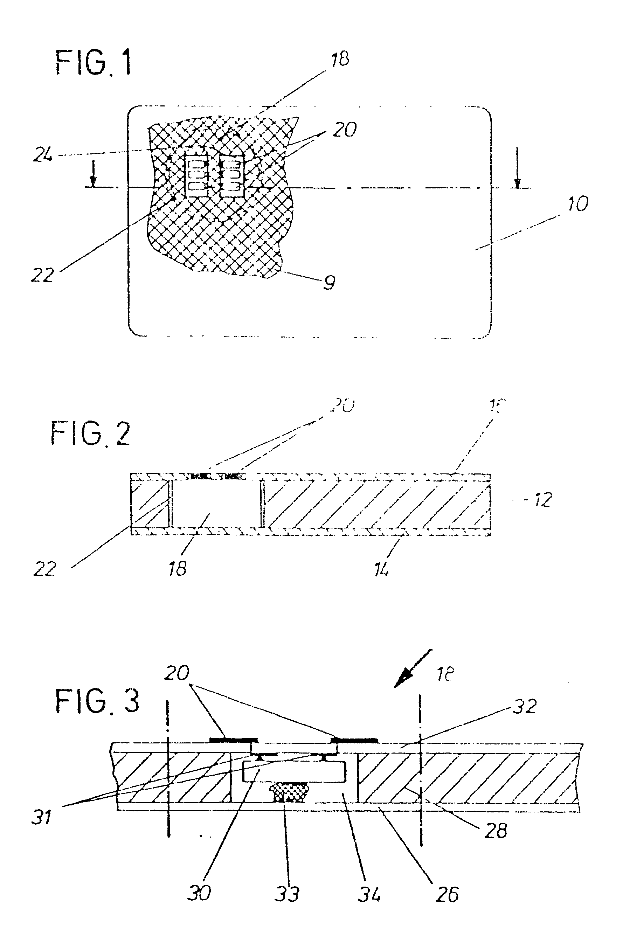

In das kreisrunde Fenster in der oberen linken Ecke der Ausweiskarte (Fig. 1) ist ein Trägerelement 18 eingesetzt, das bei dem gezeigten Ausführungsbeispiel scheibenförmig ist. Es kann einen Durchmesser von 15−20 mm aufweisen. Der Durchmesser des scheibenförmigen Trägerelements ist im wesentlichen durch die Anzahl der Kontakte bestimmt. Mit der Reduzierung der Zahl der Kontakte kann somit auch der Durchmesser verkleinert werden.

Das Element ist in ein entsprechendes, im Kartenkörper 12 vorgesehenes Fenster, eingesetzt, dessen Durchmesser etwas größer als der Außendurchmesser des Trägerelements ist. Rings um das Trägerelement bleibt somit ein Ringspalt 22 stehen, dessen Größe so bemessen sein muß, daß auch bei einem maximalen Verbiegen der Ausweiskarte keine direkte Berührung der Innenwände des Fensters mit dem Trägerelement 18 erfolgt.

Das Trägerelement 18 wird in dem Fenster lediglich durch die beiden elastischen Deckfolien 14, 16 gehalten, die selbstklebend sind, so daß das Element 18 unverrückbar in dem Fenster positioniert bleibt.

Die Deckfolie 16 weist im Bereich der Anschlußflächen 20 des Trägerelements 18 eine Aussparung 24 auf, die einen Zugang zu den Kontakten 20 ermöglicht. Vorzugsweise sind beide Deckfolien 14, 16 bedruckt. Besonders im Bereich der Aussparung 24 kann ein deckendes Druckbild 9 vorgesehen sein, um damit die Verbindungsstelle zwischen Ausweiskarte und Trägerelement optisch abzudecken. Die Folie kann außerdem weitere Sicherheits- oder Funktionsmerkmale aufweisen, wie beispielsweise eine zusätzliche Magnetpiste.

Nachfolgend wird unter Bezugnahme auf Fig. 3 das Trägerelement näher beschrieben, es besteht aus einer unteren Deckfolie 26, die mit einem Klebstoff beschichtet ist und auf die eine Dicken-Ausgleichsfolie 18 aufgelegt ist. Die Dicken-Ausgleichsfolie weist Ausstanzungen 34 auf, die groß genug sind, um einen IC-Baustein 30 frei aufnehmen zu können. Auf der Oberseite ist das Trägerelement 18 von einer Leiterfolie 32 abgedeckt, auf deren Vorderseite sich die Kontaktflächen 20 und auf deren Rückseite sich die Leiterbahnen 31 für den IC-Baustein 30 befinden. Die Leiterbahnen 31 sind mit den Kontaktflächen 20 auf der Vorderseite durchkontaktiert.

Die Kontaktflächen 20 haben vorzugsweise die gleiche Dicke wie die Dicke der Deckfolie 16, so daß die Oberfläche der Kontakte direkt mit der Oberfläche der Karte fluchtet und die Kontakte durch Reibung sich ständig selbst reinigen. Die Höhe bzw. Dicke des gesamten Trägerelements entspricht in diesem Fall der Dicke der Ausweiskarte abzüglich der Dicke der unteren Deckfolie 14.

Der IC-Baustein 30 wird im Inneren des Trägerelements 18 von einer elastischen Klebstoffmasse 33, beispielsweise einem Tropfen Silikonkleber, fixiert.

Die Deckfolie 26 und die Dicken-Ausgleichsfolie 28 sind relativ steif, so daß das Trägerelement 18 insgesamt sehr starr ist und nicht verbogen werden kann. Die Kastenbauweise des Elements stabilisiert dieses noch zusätzlich. Der im Inneren des Trägerelements auf dem elastischen Silikontropfen befestigte IC-Baustein 30 ist somit optimal geschützt.

Zur Herstellung des Trägerelements 18 wird zunächst die Leiterfolie 32 beidseitig mit Kupfer beschichtet. Daraufhin werden auf der Vorderseite der Leiterfolie die Kontaktflächen 20 und auf der Rückseite der Leiterbahnen 31 für den IC-Baustein ausgeätzt. Kontaktflächen und Leiterbahnen werden schließlich im Durchkontaktier-Verfahren miteinander verbunden.

Auf die Leiterfolie 32 wird anschließend eine Dicken-Ausgleichsfolie 28, die auch als Selbst klebefolie ausgebildet sein kann, in richtig positionierter Lage auflaminiert. Zuvor müssen in der Dicken-Ausgleichsfolie entsprechende Aussparungen 34 für die IC-Bausteine ausgestanzt werden. Die Aussparungen müssen größer sein als die IC-Bausteine, damit diese frei gelagert werden können.

Nachdem der IC-Baustein 30 nach bekannten Herstellverfahren mit den Leiterbahnenden 31 verbunden worden ist, kaschiert man über die den Baustein aufnehmende Aussparung 34 die Deckfolie 26.

Dabei wird der Baustein, wie Fig. 3 zeigt, mit Hilfe einer elastischen Klebstoffmasse 33 fixiert.

Für die manuelle Einzelfertigung von Ausweiskarten wird das Trägerelement 18 aus dem Folienverband ausgestanzt (strichlierte Linien in Fig. 3), so daß es als Einzelelement in das vorgesehene Fenster der Ausweiskarte eingesetzt werden kann. Die Ausweiskarte besteht in diesem Fertigungsstadium aus dem Karteninlett 12, auf dem die forderseitige Deckfolie 16, die die Aussparung 24 für die Kontaktflächen des Trägerelement aufweist, auflaminiert ist.

Zur Positionierung kann die den Kontaktflächen 20 zugeordnete Aussparung 24 benutzt werden. Die Positionierung kann auch durch eine entsprechende, dem Fenster der Karte angepaßte, Formgebung des Trägerelements durch eine Nut-Feder-Verrastung oder ähnliches erfolgen. Nach dem Einsetzen des Trägerelements wird schließlich die rückseitige Deckfolie auflaminiert.

Für die Serienfertigung von IC-Ausweiskarten erfolgt die Positionierung automatisch, wobei die Trägerelemente, auf einem Transportband befestigt, gemeinsam mit den zu bestückenden Ausweiskarten taktsynchron einer entsprechenden Einrichtung zugeführt werden.

In diesem Fall kann die an Trägerelement und Ausweiskarte für die manuelle Fertigung ggf. vorgesehene Positionierhilfe entfallen, d. h. das Trägerelement kann auch kreisförmig ausgebildet sein.

Unabhängig von der Art der Fertigung sind die beiden Deckfolien 14 und 16 aus hochelastischem Material im Vergleich zum Material des Trägerelements 18. Beim Biegen der Karte im Bereich des Fensters wird die Formänderungsarbeit zum größten Teil von den elastischen Folien aufgenommen. Das Trägerelement selbst bleibt von der Biegung weitgehend unbeeinflußt.

Wird das Trägerelement gegenüber den Materialien der Ausweiskarte sehr starr ausgeführt muß die Formänderungsarbeit vollständig voi den Deckfolien aufgenommen werden. Damit is eine Beschädigung des Trägerelements gänzlicl ausgeschlossen. Es muß aber im Gegensatz zun erstgenannten Fall, bei dem das Trägerelemen einen geringen Teil der Formänderungsarbei aufnimmt, mit einer früheren Ermüdung de: Deckfolienmaterials gerechnet werden.

Abschließend sei erwähnt, daß die optische Gestaltung der Karte durch das eingebettete Trägerelement kaum beeinflußt wird. Die Karte kann also sowohl für die automatische als auch für die manuelle Prüfung eingesetzt werden.

## Patentansprüche

1. Ausweiskarte (10) mit IC-Baustein (30) zu Verarbeitung elektrischer Signale, der mit einem separaten Trägerelement (18) verbunden ist, da: in ein Fenster des Kartenkörpers (12) eingesetz ist, wobei die Kontaktflächen (20) und die mi ihnen verbundenen Leiterbahnen (31) zum Be trieb des Bausteins auf dem Trägerelement (18 angeordnet sind, dadurch gekennzeichnet, daf das Trägerelement (18) eine vorgefertigte, abge schlossene Einheit ist, in deren Innerem der IC Baustein (30) angeordnet ist, dessen Anschlüss( mit den Leiterbahnen (31) verbunden sind, daf das Trägerelement (18) in das Fenster derart ein gepaßt ist, daß es von einem Spalt (22) umgebei ist, so daß direkte Berührung zwischen Träger element (18) und den Innenwänden des Fenster: vermieden wird, daß das Trägerelement (18 durch den Spalt (22) überbrückende elastisch( Verbindungselemente im Fenster gehalten is und daß das Trägerelement (18) eine größen Biegesteifigkeit als das es umgebende Materia der Ausweiskarte aufweist.

2. Ausweiskarte nach Anspruch 1, dadurch ge kennzeichnet, daß die Vorder- und Rückseite de Ausweiskarte mit Deckfolien (14, 16) abgedeck sind, wobei die vorderseitige Deckfolie (16) nu im Bereich der Kontaktflächen (20) des Träger elements (18) Aussparungen (24) aufweist.

3. Ausweiskarte nach Anspruch 2, dadurch ge kennzeichnet, daß die Deckfolien (14, 16) aufge klebt sind und das Trägerelement (18) allein voi den Deckfolien (14, 16) in seiner Lage gehalte ist.

4. Ausweiskarte nach Anspruch 2 oder 3, da durch gekennzeichnet, daß die Deckfolien (14 16) mit einem Druckbild versehen sind.

5. Ausweiskarte nach Anspruch 1 bis 4, da durch gekennzeichnet, daß das Trägerelemen (18) einen kastenförmigen Aufbau aufweist, i dem sich der IC-Baustein (30) befindet.

6. Ausweiskarte nach Anspruch 5, dadurch ge kennzeichnet, daß die Anschlüsse des IC-Bau steins (30) im Durchkontaktier-Verfahren mit de Kontaktflächen (20) des Trägerelements verbur den sind.

7. Ausweiskarte nach Anspruch 5, dadurch ge kennzeichnet, daß der IC-Baustein (30) im Inne ren des Trägerelements (18) zusätzlich mittels elastischer Elemente (33) gehalten ist

8. Ausweiskarte nach Anspruch 1 bis 7, dadurch gekennzeichnet, daß die Biegefestigkeit des Trägerelements und die Elastizität der Deckfolien so gewählt sind, daß bei einer Verformung der Ausweiskarte eine Formänderung des Trägerelements weitgehend verhindert wird.

9. Ausweiskarte nach Anspruch 1 bis 8, dadurch gekennzeichnet, daß das Trägerelement (18) rund ist.

10. Ausweiskarte nach Anspruch 1 bis 8, dadurch gekennzeichnet, daß Trägerelement (18) und Fenster des Kartenkörpers (12) Positionierhilfen aufweisen.

## Claims

1. An identification card (10) having an IC module (30) for processing electrical signals, the module being connected with a separate carrier element (18) which is set in a window in the card body (12), the contact surfaces (20) and the leads (31) connected with them for operating the module being arranged on the carrier element (18), characterized in that the carrier element (18) is a prefabricated, self-contained unit, in the interior of which the IC module (30) is arranged whose connections are connected with the leads (31), that the carrier element (18) fits into the window in such a way that it is surrounded by a gap (22) so that direct contact is avoided between the carrier element (18) and the inner walls of the window, that the carrier element (18) is held in the window by elastic connecting elements which bridge the gap (22), and that the carrier element (18) has greater flexural strength than the material of the identification card which surrounds it.

2. An identification card as in claim 1, characterized in that the front and back of the identification card are covered by cover films (14, 16), the cover film (16) on the front having recesses (24) only in the vicinity of the contact surfaces (20) of the carrier element (18).

3. An identification card as in claim 2, characterized in that the cover films (14, 16) are glued on and the carrier element (18) is held in position only by the cover films (14, 16).

4. An identification card as in claim 2 or 3, characterized in that the cover films (14, 16) are provided with a printed pattern.

5. An identification card as in claims 1 to 4, characterized in that the carrier element (18) has a box-type construction in which the IC module (30) is located.

6. An identification card as in claim 5, characterized in that the connections of the IC module (30) are connected to the contact surfaces (20) of the carrier element by the throughplating method.

7. An identification card as in claim 5, characterized in that the IC module (30) is held in the interior of the carrier element (18) additionally by means of elastic elements (33).

8. An identification card as in claims 1 to 7, characterized in that the flexural strength of the carrier element and the elasticity of the cover films are selected in such a way that a change of shape of the carrier element when the identification card is deformed is prevented to a large extent.

9. An identification card as in claims 1 to 8, characterized in that the carrier element (18) is round.

10. An identification card as in claims 1 to 8, characterized in that the carrier element (18) and the window in the card body (12) have positioning aids.

## Revendications

1. Carte d'identité (10) comportant un élément de circuit intégré (30) pour le traitement de signaux électriques, cet élément étant assemblé à un élément support séparé (18) qui est introduit dans une fenêtre du corps (12) de la carte, les surfaces de contact (20) et les bandes conductrices (31) qui y sont raccordées, étant disposées sur l'élément support (18) en vue d'actionner l'élément de circuit intégré, caractérisée en ce que l'élément support (18) est une unité fermée et préfabriquée à l'intérieur de laquelle est disposé l'élément de circuit intégré (30) dont les raccordements sont raccordés aux bandes conductrices (31); l'élément support (18) est adapté dans la fenêtre de telle sorte qu'il soit entouré d'un espace (22) afin d'éviter tout contact direct entre l'élément support (18) et les parois intérieures de la fenêtre; l'élément support (18) est maintenu dans la fenêtre par les éléments d'assemblage élastiques comblant l'espace (22) et l'élément support (18) a une rigidité à la flexion supérieure à celle de la matière de la carte d'identité qui l'entoure.

2. Carte d'identité suivant la revendication 1, caractérisée en ce que la face frontale et la face dorsale de cette carte d'identité sont recouvertes par des feuilles de recouvrement (14, 16), la feuille de recouvrement frontale (16) comportant des évidements (24) uniquement dans la zone des surfaces de contact (20) de l'élément support (18).

3. Carte d'identité suivant la revendication 2, caractérisée en ce que les feuilles de recouvrement (14, 16) sont collées et l'élément support (18) est maintenu en place uniquement par les feuilles de recouvrement (14, 16).

4. Carte d'identité suivant la revendication 2 ou 3, caractérisée en ce que les feuilles de recouvrement (14, 16) comportent une image imprimée.

5. Carte d'identité suivant les revendications 1 à 4, caractérisée en ce que l'élément support (18) a une structure modulaire dans laquelle se trouve l'élément de circuit intégré (30).

6. Carte d'identité suivant la revendication 5, caractérisée en ce que les raccordements de l'élément de circuit intégré (30) sont raccordés par le procédé de contact transversal avec les surfaces de contact (20) de l'élément support.

7. Carte d'identité suivant la revendication 5, caractérisée en ce que l'élément de circuit intégré (30) est maintenu, en outre, à l'intérieur de l'élément support (18) au moyen d'éléments élastiques (33).

8. Carte d'identité suivant les revendications 1 à 7, caractérisée en ce que la résistance à la flexion de l'élément support et l'élasticité des feuilles de recouvrement sont choisies de telle sorte que, lors d'une déformation de la carte d'identité, on évite essentiellement un changement de forme de l'élément support.

9. Carte d'identité suivant les revendications 1 à 8, caractérisée en ce que l'élément support (18) est circulaire.

10. Carte d'identité suivant les revendications 1 à 8, caractérisée en ce que l'élément support (18) et la fenêtre du corps (12) de la carte comportent des éléments auxiliaires de localisation.

FIG. 1

FIG. 2

FIG. 3